Europäisches Patentamt

European Patent Office

Office européen des brevets

(19)

(11) Veröffentlichungsnummer : **0 074 665**
**B1**

(12) **EUROPÄISCHE PATENTSCHRIFT**

(45) Veröffentlichungstag der Patentschrift :
07.05.86

(51) Int. Cl.⁴ : **A 01 F 15/00, B 65 G 15/42**

(21) Anmeldenummer : **82108464.7**

(22) Anmeldetag : **14.09.82**

(54) Bandförmiger Riemen für Maschinen zum Aufnehmen von Erntegut und Bilden von zylindrischen Ballen.

(30) Priorität : **15.09.81 US 302001**

(43) Veröffentlichungstag der Anmeldung :
**23.03.83 Patentblatt 83/12**

(45) Bekanntmachung des Hinweises auf die Patenterteilung : **07.05.86 Patentblatt 86/19**

(84) Benannte Vertragsstaaten :
**BE DE FR GB IT LU NL**

(56) Entgegenhaltungen :
**DE-A- 2 261 115**
**DE-A- 2 808 244**
**FR-A-  991 280**
**FR-A- 1 023 148**
**FR-A- 2 385 615**
**US-A- 4 198 804**

(73) Patentinhaber : **DEERE & COMPANY**
**1 John Deere Road**
**Moline Illinois 61265 (US)**

(72) Erfinder : **Soteropulos, Gust S.**
**345, E. Alta Vista**
**Ottumwa Iowa 52501 (US)**
Erfinder : **Anstey, Henry Dennis**
**R. R. 4 Box 188A**
**Ottumwa Iowa 52501 (US)**

(74) Vertreter : **Fricke, Joachim, Dr. et al**
**Dr. R. Döring, Dr. J. Fricke, Patentanwälte Josephspi-**
**talstrasse 7**
**D-8000 München 2 (DE)**

**Beschreibung**

Die Erfindung betrifft eine Maschine zum Aufnehmen von Erntegut und zum bilden von zylindrischen Ballen mit den Merkmalen den Oberbegriffs des Anspruchs 1.

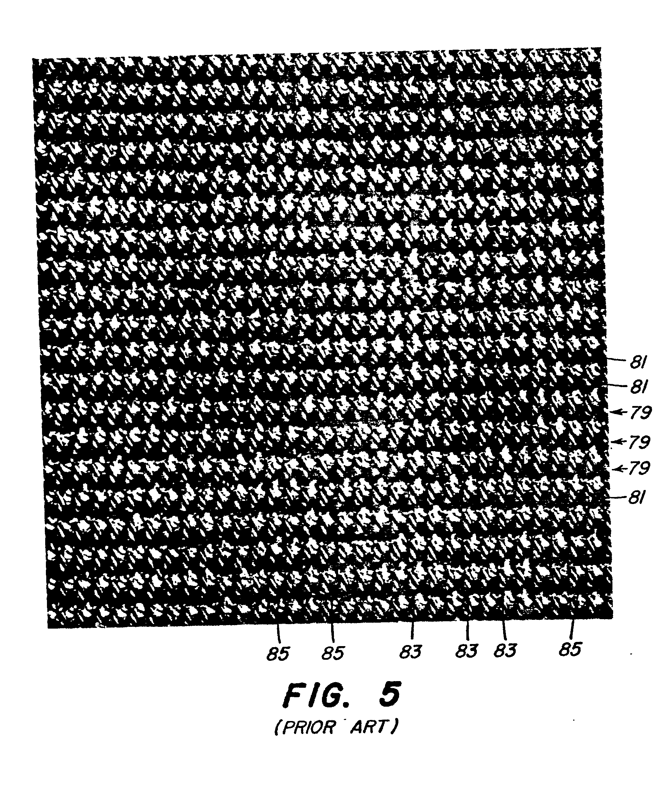

Eine Solche Maschine ist aus der US-A-4 252 057 bekannt. Die bei dieser bekannten Maschine in der Praxis eingesetzten Riemen weisen die aus dem Oberbegriff des Anspruchs 1 entnehmbaren Merkmale und eine Oberflächenstruktur auf, wie sie aus der angehängten Figur 5 ersichtlich ist.

Die Oberflächenstruktur der bekannten Riemen besteht aus einem aus dem Riemenkörper einseitig hervorragenden Grundmuster von in sich geschlossenen und sich kreuzenden Rippen, die in Längsrichtung des Riemens und quer dazu verlaufen und in Riemenlängsrichtung langgestreckte allseitig umschlossene, rechteckförmige Vertiefungen begrenzen. Nach außen setzen sich die Rippen in unregelmäßigen Vorsprüngen fort, die unterschiedliche Höhe und unterschiedliche Querabmessungen aufweisen, so daß sich das aus Fig. 5 ersichtliche rauhe Oberflächenprofil ergibt.

Diese die Oberflächenreibung erhöhende Oberflächenstruktur der Riemen der bekannten Maschine ermöglichen ein im Vergleich zu Riemen mit im wesentlichen glatter Oberfläche sichereres und festeres wickeln der zylindrischen Ballen. Die Praxis zeigt jedoch, daß das Erntegut sowie andere Feststoffteilchen dazu neigen sich in den unregelmäßigen Ausnehmungen der Oberflächenstruktur des Riemens einzufangen und festzuklemmen. Dies führt einmal zu relativ hohen Verlusten, insb. an feinen Blättern des Erntegutes. Ein weiterer wesentlicher Nachteil besteht darin, daß durch die große Unregelmäßigkeit und hohe Rauhheit in großen Mengen Staub entwickelt wird, die insb. für den Fahrer störend sind. Ein weiterer Nachteil der bekannten Riemen besteht darin, daß dieser zu einer erheblichen Geräuschentwicklung führt, insb. dort, wo die Riemen mit ihrere stark gegliederten Oberflächenstruktur unmittelbar auf Umlenkrollen der Maschine aufliegen.

Demgegenüber ist es Aufgabe der Erfindung eine Maschine mit den Merkmalen des Oberbegriffs des Anspruchs 1 so weiterzubilden, daß einerseits die für das Anwickeln und das Festwickeln der zylindrischen Ballen erforderliche Griffgkeit der Riemen gewährleistet bleibt, andererseits die starke Entwicklung von Geräusch und Staub und die Gefahr des sich Festsetzens von Erntegut- und anderen Feststoffteilchen an den Riemen und das Auftreten größerer Erntegutverluste vermieden wird.

Diese Aufgabe wird durch die Merkmale des Anspruchs 1 gelöst.

Es sind zahlreiche Riemen mit besonderer Oberflächenstruktur von anderen Einsatzbereichen bekannt. So zeigt die DE-A-2 261 115 einen Deckbandförderer mit zwei sich in einem Teil ihres gemeinsamen Förderweges berührenden und gleichsinnig laufenden Förderbändern, von denen wenigstens das eine auf seiner förderwirksamen Fläche eine elastisch verformbare Schaumstoffschicht und das andere Förderband eine Oberflächenprofilierung aufweist, die aus wabenförmig sich kreuzenden Rippen gleichbleibender Höhe bestehen. Durch die Einhüllung des zu fördernden Gutes durch die Schaumstoffschicht auf der einen Seite und die Profilierung des Riemens auf der anderen Seite wird eine sichere Mitnahme auch auf steilen Förderstrecken sichergestellt. Bei der Stückgutförderung, z. B. der Förderung von Kartons, Kisten, Säcken oder dgl. ist es bekannt, die die rhombenförmigen Vertiefungen begrenzenden Rippen von gleichbleibender Höhe durch parallel zur Riemenlängsrichtung geführte tiefe Einschnitte in einzelne Rippenblöcke zu unterteilen, die einzeln und unabhängig voneinander flexibel sind, um so eine größere Elastizität der einzelnen Blöcke zu gewährleisten, wie aus der US-A-2 909 271 hervorgeht. Für den Transport auf steileren Strecken von feinkörnigem Material sind ebenfalls bandförmige Riemen mit in die glatte Riemenoberfläche eingearbeiteten rhombenförmigen Vertiefungen bekannt, wie aus der FR-A-991 208 hervorgeht.

Demgegenüber geht es bei der vorliegenden Erfindung um die Verbesserung einer Maschine zum Aufnehmen von Erntegut und zum Bilden von zylindrischen Ballen. Durch den Einsatz von Riemen mit einer Oberflächenstruktur, wie sie durch die Merkmale des Anspruchs 1 bestimmt ist, wird erreicht, daß die Riemen zwar eine ausreichende Oberflächenreibung aufweisen, um das Gut in der Maschine sicher anzuwickeln und einen stabilen festen zylindrischen Ballen herzustellen, wobei aber die oben aufgezeigten Nachteile der für diese Maschinen bekannten Riemen vermieden werden. So verhindert die Ausbildung der Rippen zuverlässig ein Festsetzen von Erntegutteilen oder anderen Feststoffteilen in der Oberflächenstruktur des Riemens. Die Riemen haben bei ihrem Umlauf um die Rollen ein sehr gutes Selbstreinigungsvermögen. Da die Oberflächenstruktur von festgesetzten Erntegutteilchen oder dgl. freibleibt, bleiben auch die Erntegutverluste, insb. die Verluste an kleinen Blatt-Teilchen vergleichsweise gering, auch dann, wenn es sich um relativ trockenes Erntegut, wie Heu, handelt. Aufgrund der guten Selbstreinigungsfähigkeit der Oberflächenstruktur bleibt die für das Wickeln erwünschte Oberflächenreibung während des Betriebes unverändert erhalten. Aufgrund der Ausbildung wird auch eine wesentliche Verringerung der Geräuschbildung gerade an den Stellen erzielt, an denen die Oberflächenstruktur in Kontakt mit einer Umlenkrolle steht.

In aller Regel weisen Maschinen der in Frage stehenden Gattung im Eintrittsbereich der Wickelkammer Wickelstartwalzen aus Metall auf, die an ihrem Umfang in Abständen und in Walzenlängsrichtung verlaufende Mitnehmerrippen aufweisen. In diesem Fall ist die Höhe der Rippen der Riemen vorteilhafterweise kleiner als die Höhe der Mitnehmerrippen, die in Längsrichtung auf der aus Metall bestehenden Wickelstartwalze im Einlauf der Wickelkammer vorgesehen sind. Dadurch wird zuverlässig verhindert, daß im Bereich der Wickelstartwalze sich das Erntegut auf der Walze festwickelt, da das Erntegut von der Wickelstartwalze durch die Riemen sicher abgestreift wird. In ähnlicher Weise verhindern die Riemen auch das Aufwickeln von Erntegut auf den übrigen Rollen der Maschine. Dadurch werden Störungen des Betriebes und die Gefahr eines Reißens von Riemen weitgehend vermieden.

Die Griffigkeit ebenso wie die Selbstreinigungsfähigkeit der Riemen wird noch verbessert, wenn die parallel zur Unterseite des Riemens gemessene Dicke der Rippen von der tiefsten Stelle der Ausnehmung aus nach außen abnimmt. Im gleichen Sinne begünstigend wirkt eine Ausbildung, bei der die Höhe der Rippen zwischen 1 mm und 10 mm und die maximale lichte Weite der Ausnehmungen zwischen 2 mm und 12 mm liegt.

Um eine gute Flexibilität zu gewährleisten ist es zweckmäßig, daß die maximale Ausdehnung der Ausnehmungen parallel zur Riemenlängsrichtung kleiner als die maximale Ausdehnung in Riemenquerrichtung ist. Auch wird dadurch ein weites Öffnen der Ausnehmungen zur Selbstreinigung erreicht, wenn die Riemen mit ihrer glatten Unterseite um die Umlenkrollen laufen.

Weitere vorteilhafte Merkmale gehen aus den übrigen Unteransprüchen hervor.

Die Erfindung wird nachfolgend anhand schematischer Zeichnungen an einem Ausführungsbeispiel näher erläutert.

Es zeigen :

Figur 1 im senkrechten Schnitt parallel zur Fahrtrichtung eine Maschine gemäß der Erfindung, wobei der Schnitt entlang der Schnittlinie I-I der Figur 2 gelegt ist.

Figur 2 eine perspektivische Ansicht schräg von vorne eines Teils der in Fig. 1 gezeigten Maschine.

Figur 3 im größeren Maßstabe und im Ausschnitt eine Draufsicht auf die profilierte Seite eines Riemens, der bei der Maschine nach der Erfindung verwendet wird.

Figur 4 im größeren Maßstabe einen Querschnitt entlang der Schnittlinie 4-4 der Figur 3 und

Figur 5 eine Draufsicht auf die strukturierte Oberseite eines bekannten Riemens der Maschine mit den Merkmalen des Oberbegriffs des Anspruchs 1.

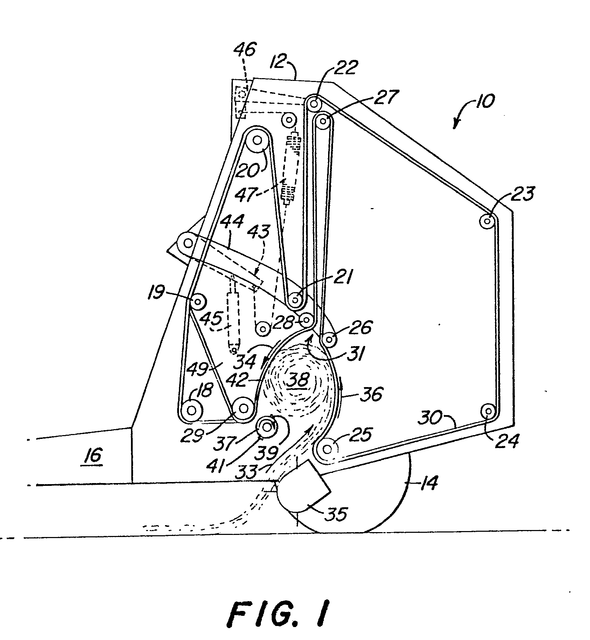

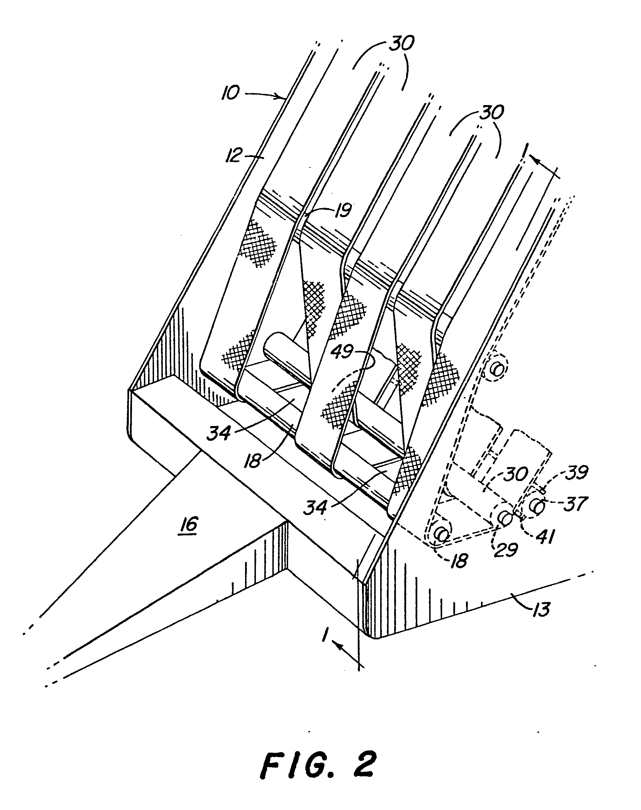

Die Figuren 1 und 2 zeigen eine Maschine 10 gemäß der Erfindung, bei der die nachfolgend näher beschriebenen Riemen angewendet werden. Das Maschinengestell weist zwei aufrechte Seitenwände 12 und 13 mit nicht dargestellten Querverbindungsgliedern auf und ist auf Laufrädern 14 abgestützt und wird mit Hilfe einer Zugstange 16 z. B. von einem Ackerschlepper über das Feld gezogen. Zwischen den Seitenwänden 12 und 13 erstrecken sich mehrere Rollen 18 bis 29 über die mehrere Riemen 30 nebeneinanderliegend geführt sind. Die Riemen begrenzen eine Wickelkammer 31 von veränderlichem Durchmesser. Im unteren Bereich wird ein Einlauf 33 zwischen den Rollen 29 und 25 gebildet, in dem eine das Anwickeln des Ballens unterstützende Wickelstartwalze 37 angeordnet ist, die auf ihrem Umfang mehrere Mitnehmerrippen 39, 41 aufweist. Die Wickelstartwalze dient außerdem dazu, Erntegutteile von dem Riementrum 42 abzustreifen.

Bei der dargestellten Maschine wird angenommen, daß die Rolle 29 mit der Zapfwelle des Ackerschleppers antriebsmäßig verbunden ist, so daß die Riemen in Richtung der Pfeile 34 und 36 angetrieben werden. Die Wickelstartwalze ist so angeordnet und wird so angetrieben, daß die Mitnehmerrippen 39 und 41 von der Oberfläche des Riemens einen geringen Abstand von z. B. 3 bis 6 cm aufweisen.

Die Wickelkammer 31 ist von veränderlichem Durchmesser. Die Veränderung des Durchmessers wird durch eine Riemenspanneinrichtung 43 kontrolliert, welche die Rollen 8, 26 und 28 am Ende eines Trägerarmes 45 umfaßt, sowie eine weitere Rolle 21, welche die jeweils überschüssige Riemenlänge aufnimmt und während der Zunahme des Ballendurchmessers diese Riemenlänge wieder freigibt. Über die Spanneinrichtung 43 kann auch die Dichte des Ballens beeinflußt werden. Dazu dienen zwei hydraulische Zylinder 45, Federn 47 sowie Arme 46, wie diese aus Figur 1 ersichtlich sind.

Die Riemen 30 werden im unteren vorderen Bereich abwechselnd über die Rollen 18 bzw. 29 geführt (vgl. auch Figur 1), so daß jeder zweite von den nebeneinanderlaufenden Riemen die Rolle 18 überspringt. Dadurch werden mehrere seitliche Öffnungen 34 geschaffen, durch die außerhalb der Wickelkammer befindliches Erntegut entweichen kann, bevor es auf den Rollen aufzuwickeln beginnt und im Bereich 49 (Figur 2) eine Gutanhäufung verursacht.

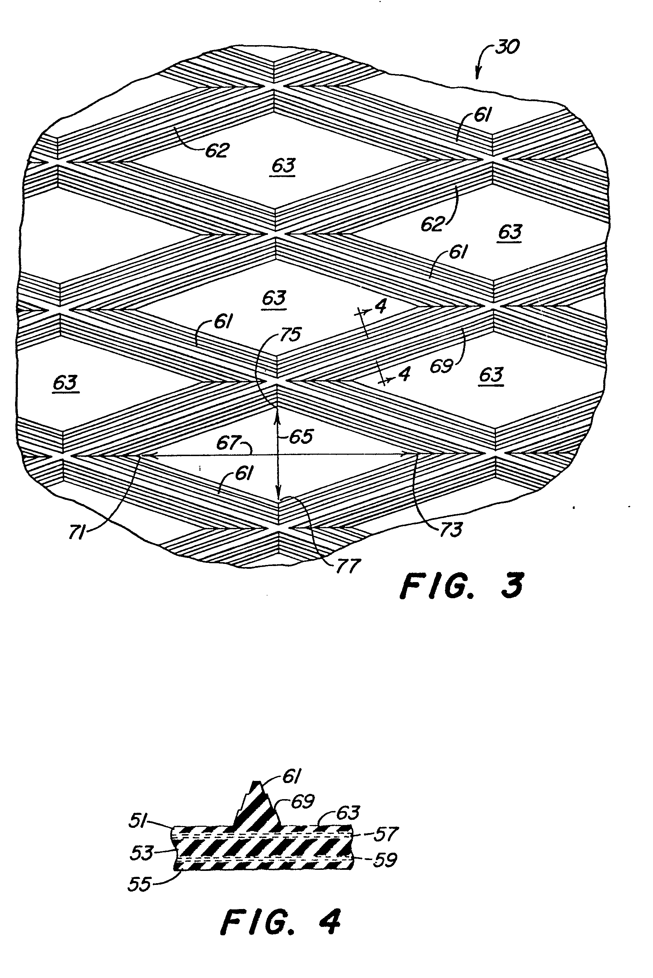

Figur 3 zeigt im vergrößerten Maßstabe und im Ausschnitt die profilierte Seite eines Riemens 30. In der Darstellung ist angenommen, daß die Längsrichtung des Riemens parallel zur Längskante des Zeichenblattes verläuft. Die besondere Art und Ausbildung des Riemens hat besondere Bedeutung bei der Anwendung in der Mamaschine nach Fig. 1 und 2.

Der Riemen 30 besteht aus mehreren Lagen 51, 53 und 55 aus elastomerem Material (vgl. auch den Querschnitt nach Fig. 4). Zwischen diesen Lagen sind zwei Lagen von Verstärkungen 57 und 59 aus textilem Material eingebettet. Das elastomere Material ist Gummi mit einer Härte zwischen 50 und 70 Shore A. Anstelle von Gummi kann auch ein anderes Material, z. B. PVC, verwendet werden. Auf seiner einen Oberfläche weist der Riemen 30 zwei Gruppen von ausgeformten Rippen 61, 62 auf. Die ausgeformten Rippen beider Gruppen verlaufen kontinuierlich von einer Längsseite des Riemens zu dessen anderer Längsseite. Die Rippen in jeder der beiden Gruppen verlaufen untereinander parallel, schneiden oder kreuzen jedoch die Rippen der anderen Gruppe. Dadurch werden zwischen den Rippen 61 und 62 Ausnehmungen 63 vollständig eingegrenzt, die nach außen hin offen sind. Die Höhe der ausgeformten Rippen 61, 62 ist gleichbleibend, jedoch so bemessen, daß sie kleiner als die maximale lichte Weite der Ausnehmungen gemessen in Längsrichtung der Ausnehmungen ist. Die bevorzugte Höhe der Wandbereiche liegt zwischen 1 mm und 10 mm und die maximale lichte Weite zwischen 2 mm und 12 mm.

Im Vergleich zu der strukturierten Riemenoberfläche nach Fig. 5 sind die Ausnehmungen 63 relativ groß und weit nach außen geöffnet. Dadurch wird verhindert, daß sich Erntegut in den Ausnehmungen 63 festsetzen kann. Auch die Staubbildung wird stark eingeschränkt. Insgesamt sind die Verluste an Erntegut wesentlich kleiner als bei den bekannten Riemen. Durch die gleichbleibende Höhe der ausgeformten Rippen bilden deren Kämme eine sichere, gleichmäßige Auflage der Riemen auf Rollen, auf denen die profilierte Seite der Riemen am Rollenumfang anliegt. Dadurch ergibt sich eine geringe Geräuschentwicklung. Durch die sichere Mitnahme oder die Griffigkeit der Riemen werden weitgehend alle Erntegutteilchen sicher in den zylindrischen Ballen mit eingewickelt. Die Dicke der ausgeformten Rippen gemessen parallel zur Flächenausnehmung des Riemens 30 nimmt in Richtung vom Boden der Ausnehmungen 63 weg ab. Dies erleichtert die Freigabe des Erntegutes durch die Riemen. Die Dicke der Rippen 61, 62 in höhe des Bodens der Ausnehmungen 63 beträgt etwa 4 mm. Durch die Dickenabnahme der Wandbereiche wird das Abreißen feiner Blättchen vom Erntegut verhindert und wird vor allem empfindliches Erntegut besonders geschont. Die Abnahme der Dicke der Rippen 61, 62 erfolgt zweckmäßigerweise dadurch, daß die Flanken vom Boden der Ausnehmungen 53 weg konvergieren und im Querschnitt im wesentlichen dreieckförmig sind und gleichzeitig unter Bildung von Schultern oder Stufen 69 abgestuft sind. Im Bereich der Wickelkammer wird der Riemen 30 beim Überlaufen der die Wickelkammer begrenzenden Rollen um seine unprofilierte Rückseite gebogen, was bewirkt, daß beim Einlaufen und Auslaufen aus dem Bereich der Wickelkammer die Ausnehmungen gespreizt werden, was beim Auslaufen die Freigabe des Erntegutes wesentlich begünstigt. Dabei ist es wesentlich, daß die ausgeformten Rippen 61 oder 62 durchgehend oder geschlossen ausgebildet und nicht durch Trennschnitte in einzelne Finger unterteilt sind.

In einigen Anwendungsfällen können die Flanken der Rippen 61, 62 auch glatt oder parallel zueinander ausgebildet sein, bevorzugt wird jedoch die Querschnittsausbildung nach Fig. 4. Im dargestellten Beispiel weist jede Ausnehmung 63 einen polygonalen Umriß in Form eines geraden Parallelogramms auf. Es ist auch möglich für die Ausnehmungen andere polygone Umrisse, z. B. Dreiecke, Quadrate oder Rechtecke vorzusehen. Die Ausnehmungen können auch kreisförmig oder elliptisch begrenzt sein. Die Ausbildung gerader Parallelogramme in der Form nach Fig. 3 wird jedoch bevorzugt.

Die kürzere Diagonale 65 zwischen den Ecken 75, 77 der Ausnehmung 63 läuft parallel zur Längserstreckung des Riemens und ist wesentlich kürzer als die quer zur Riemenlängserstreckung und zwischen den Ecken 71 und 73 verlaufende Diagonale 67. Bei der Ausbildung nach Fig. 3 ist das Biegemoment des Riemens 30 um zu der längeren Diagonale 67 parallele Linien wesentlich kleiner als bei in anderer Richtung, insb. in Längsrichtung des Riemens verlaufenden Biegelinien. Dadurch wird die Lebensdauer der bei einem Umlauf mehrfach und in verschiedenen Richtungen und um Rollen von relativ kleinem Durchmesser gebogenen Riemen wesentlich erhöht. Es ergibt sich auch eine genauere Bestimmung der Grenzen der Wickelkammer.

Die Wickelstartwalze 37 ist in ihrem Mitnehmereffekt auf den Reibungskoeffizienten oder Mitnehmereffekt der profilierten Oberfläche der Riemen 30 abgestimmt. Dieser Abstimmung kommt wesentliche Bedeutung zu, da dadurch ein Wiederaustreten von Erntegut aus der Wickelkammer im Bereich zwischen der Rolle 29 und der Wickelstartwalze 37 verhindert wird. Auch das Aufwickeln des Erntegutes auf der Wickelstartwalze wird dadurch im wesentlichen verhindert. Die Wickelstartwalze 37, die aus Stahl besteht, weist zu diesem Zweck eine Höhe ihrer Mitnehmerrippen 39 und 41 auf, die größer ist als die Höhe der ausgeformten Rippen 61, 62 der Riemen. Während die Höhe der Wandbereiche 61, 62 z. B. 4 mm beträgt, beträgt die Höhe der Mitnehmerrippen 39, 41 etwa 8 mm und ihre Breite etwa 25 mm.

Eine Abstimmung zwischen der Rolle 29 und der Wickelstartwalze 37 kann auch dadurch erfolgen, daß die Wickelstartwalze mit Gummi überzogen wird, wobei die Minehmerrippen 39, 41 eine geringere Höhe erhalten. Wenn die Wickelstartwalze mit einem Material überzogen wird, das dem elastomeren Material der Riemen entspricht, können die Mitnehmerrippen und die ausgeformten Wandbereiche auch im wesentlichen gleiche Abmessungen aufweisen. Bevorzugt wird jedoch eine aus Metall bestehende Wickelstartwalze.

Die von Längsseite zu Längsseite des Riemens 30 durchgehenden ausgeformten Rippen 61, 62, die gleichbleibende Höhe aufweisen, sichern eine gute, vollständige gleichmäßige Auflage auch der strukturierten Oberfläche des Riemens auf einer Umlenkwalze, z. B. der Umlenkwalze 21, so daß durch die profilierte Oberfläche nur eine geringe Geräuschentwicklung entsteht.

Bei der strukturierten Oberfläche des bekannten Riemens entstehen durch das Verstärkungsgewebe viele Querrippen 79 mit freiliegenden erhabenen Bereichen 81 von unterschiedlicher Höhe. Außerdem entstehen mehrere Rippenbereiche 83 von geringerer Höhe als die Rippen 79. Dazwischen liegen eine Vielzahl von kleineren Ausnehmungen 85. Die ungleichförmige Oberfläche erzeugt beim Umlauf einen erheblichen Lärmpegel. Außerdem wird ein erheblicher Anteil an Staub gebildet. Schließlich kann sich das Erntegut leicht in den relativ engen und unregelmäßigen Ausnehmungen festsetzen, was das Wickeln auf den Rollen begünstigt und zu höheren Erntegutverlusten führt.

**Patentansprüche**

1. Maschine zum Aufnehmen von Erntegut und zum Bilden von zylindrischen Ballen (38), bei der eine Wickelkammer (31) von veränderlichem Durchmesser durch Riemen (30) begrenzt wird, welche Riemen aus mit Verstärkungen (57, 59) versehenem, elastomeren Material (51, 53, 55) bestehen und eine glatte Unterseite sowie eine die Oberflächenreibung erhöhende Oberflächenstruktur auf der anderen Seite aufweisen, die aus sich regelmäßig über die Länge und die Breite des Riemens (30) wiederholende Ausnehmungen (63) besteht, welche allseits durchgehend durch Rippen (61, 62) von einander getrennt sind, dadurch gekennzeichnet, daß die Rippen (61, 62) gegenüber der glatten Unterseite des Riemens (30) etwa gleichbleibende Höhe aufweisen, und ihre Höhe über der tiefsten Stelle der Ausnehmung (63) kleiner ist als die maximale lichte Weite (67) der Ausnehmung (63).

2. Maschine nach Anspruch 1, dadurch gekennzeichnet, daß die Höhe der Rippen (61, 62) kleiner ist als die Höhe von Mitnehmerrippen (39, 41), die in Längsrichtung auf einer aus Metall bestehenden Wickelstartwalze (37) im Einlauf der Wickelkammer (31) vorgesehen sind.

3. Maschine nach Anspruch 1 oder 2, dadurch gekennzeichnet, daß die parallel zur Unterseite des Riemens (30) gemessene Dicke der Rippen (61, 62) von der tiefsten Stelle der Ausnehmung (63) aus nach außen abnimmt.

4. Maschine nach einem der Ansprüche 1 bis 3, dadurch gekennzeichnet, daß die Höhe der Rippen (61, 62) zwischen 1 mm und 10 mm und die maximale lichte Weite (67) der Ausnehmungen (63) zwischen 2 mm und 12 mm liegt.

5. Maschine nach einem der Ansprüche 1 bis 4, dadurch gekennzeichnet, daß die Ausnehmungen (63) jeweils einen polygonalen Umriß aufweisen.

6. Maschine nach einem der Ansprüche 1 bis 5, dadurch gekennzeichnet, daß die maximale lichte Weite (65) der Ausnehmungen (63) parallel zur Riemenlängsrichtung kleiner als die maximale lichte Weite (67) in Riemenquerrichtung ist.

7. Maschine nach einem der Ansprüche 1 bis 4, dadurch gekennzeichnet, daß die Ausnehmungen (63) einen kreisförmigen Umriß aufweisen.

8. Maschine nach einem der Ansprüche 5 oder 6, dadurch gekennzeichnet, daß die Rippen (61, 62) in zwei Gruppen von unter sich jeweils parallelen und von Längsrand zu Längsrand des Riemens (30) durchgehenden Rippen unterteilt sind und sich die Rippen der einen Gruppe und die Rippen der anderen Gruppe kreuzen.

9. Maschine nach Anspruch 5 und 6, dadurch gekennzeichnet, daß die Ausnehmungen (63) jeweils einen Umriß in Form eines Parallelogramms aufweisen.

10. Maschine nach Anspruch 9, dadurch gekennzeichnet, daß die kürzere und die längere Parallelogrammdiagonale parallel zur Riemenlängsrichtung bzw. quer zur Riemenlängsrichtung orientiert sind.

11. Maschine nach einem der Ansprüche 3 bis 10, dadurch gekennzeichnet, daß die von der tiefen Stelle der Ausnehmungen (63) aus jeweils nach außen konvergierenden Flanken der Rippen (61, 62) jeweils abgestuft (69) oder in äquivalenter Weise proviliert ausgebildet sind.

12. Maschine nach einem der Ansprüche 1 bis 6, dadurch gekennzeichnet, daß die Rippen (61, 62) so geformt und orientiert sind, daß der Biegewiderstand des Riemens (30) um eine quer zur Längsrichtung des Riemens verlaufende Achse kleiner ist als um eine parallel zur Längsrichtung des Riemens (30) verlaufende Achse.

**Claims**

1. A machine for picking up crop material and for forming cylindrical bales (38), wherein a variable-diameter baling chamber (31) is defined by belts (30) which comprise elastomeric material (51, 53, 55) provided with reinforcements (57, 59), and which have a smooth underside and on the other side a surface structure for increasing surface friction, comprising recesses (63) which are regularly repeated over the length and the width of the belt (30) and which are separated from each other on all sides continuously by ribs (61, 62), characterised in that the ribs (61, 62) are of substantially uniform height relative to the smooth underside of the belt (30) and their height above the lowest point of the recess (63) is less than the maximum inside width (67) of the recess (63).

2. Machine according to claim 1, characterised in that the height of the ribs (61, 62) is less than the height of entrainment ribs (39, 41) which are provided in the longitudinal direction on a metal baling-starting roller (37) in the intake of the baling chamber (31).

3. A machine according to claim 1 or claim 2 characterised in that the thickness of the ribs (61, 62), as measured in parallel relationship to the underside of the belt (30), decreases outwardly from the lowest point of the recess (63).

4. A machine according to one of claims 1 to 3 characterised in that the height of the ribs (61, 62) is between 1 mm and 10 mm and the maximum inside width (67) of the recesses (63) is between 2 mm and 12 mm.

5. A machine according to one of claims 1 to 4 characterised in that the recesses (63) are each of a polygonal outline.

6. A machine according to one of claims 1 to 5 characterised in that the maximum inside width (65) of the recesses (63) parallel to the longitudinal direction of the belt is less than the maximum inside width (67) in the transverse direction of the belt.

7. A machine according to one of claims 1 to 4 characterised in that the recesses (63) are of a circular outline.

8. A machine according to one of claims 5 or 6 characterised in that the ribs (61, 62) are subdivided into two groups of ribs which are respectively parallel to each other and which extend continuously from one longitudinal edge of the belt (30) to the other, and the ribs of one group and the ribs of the other group cross.

9. A machine according to claim 5 and claim 6 characterised in that the recesses (63) each have an outline in the form of a parallelogram.

10. A machine according to claim 9 characterised in that the shorter and the longer diagonals of the parallelogram are respectively in parallel relationship to the longitudinal direction of the belt and in transverse relationship to the longitudinal direction of the belt.

11. A machine according to one of claims 3 to 10 characterised in that the sides of the ribs (61, 62), which sides respectively converge outwardly from the lowest point of the recesses (63), are respectively stepped (69) or are of a profiled configuration in equivalent manner.

12. A machine according to one of claims 1 to 6 characterised in that the ribs (61, 62) are so formed and oriented that the resistance to bending of the belt (30) about an axis extending transversely with respect to the longitudinal direction of the belt is less than about an axis extending parallel to the longitudinal direction of the belt (30).

**Revendications**

1. Machine pour le ramasage de produits de récolte et pour la formation de balles cylindriques (38) dans laquelle une chambre d'enroulement (31) de diamètre variable est délimitée par des courroies (30), ces courroies étant en matière élastomère (51, 53, 55) munie de renforcements (57, 59) et comportant une face inférieure lisse ainsi qu'une structure de surface augmentant la friction superficielle sur son autre face, cette structure étant constituée par des dépressions ou cavités (63) se reproduisant de façon régulière sur la longueur et la largeur de la courroie (30) et séparées les unes des autres de tous côtés de façon continue par des nervures (61, 62), caractérisée en ce que les nervures (61, 62) présentent, par rapport à la face inférieure lisse de la courroie (30), une hauteur sensiblement uniforme, leur hauteur au-dessus du point le plus profond de la dépression (63) étant plus petite que la dimension intérieure maximum (67) de la dépression (63).

2. Machine suivant la revendication 1, caractérisée en ce que la hauteur des nervures (61, 62) est inférieure à la hauteur des nervures d'entraînement (39, 41) qui sont prévues dans le sens longitudinal sur un rouleau ou cylindre d'amorce d'enroulement (37) formé par du métal, prévu à l'entrée de la chambre d'enroulement (31).

3. Machine suivant la revendication 1 ou 2, caractérisée en ce que l'épaisseur des nervures (61, 62) mesurée parallèlement à la face inférieure de la courroie (30), va en diminuant vers l'extérieur à partir du point le plus profond de la dépression (63).

4. Machine suivant l'une quelconque des revendications 1 à 3, caractérisée en ce que la hauteur des nervures (61, 62) est comprise entre 1 mm et 10 mm et la dimension intérieure maximum (67) des dépressions (63) est comprise entre 2 mm et 12 mm.

5. Machine suivant l'une quelconque des revendications 1 à 4, caractérisée en ce que les dépressions (63) ont chaque fois un contour polygonal.

6. Machine suivant l'une quelconque des revendications 1 à 5, caractérisée en ce que la dimension intérieure maximum (65) des dépressions (63), mesurée parallèlement à la direction longitudinale des courroies, est plus petite que la dimension intérieure maximum (67) mesurée dans la direction transversale des courroies.

7. Machine suivant l'une quelconque des revendications 1 à 4, caractérisée en ce que les dépressions (63) présentent un contour circulaire.

8. Machine suivant la revendication 5 ou 6, caractérisée en ce que les nervures (61, 62) sont divisées en deux groupes de nervures parallèles entre elles et s'étendant de façon continue d'un bord longitudinal à l'autre bord longitudinal de la courroie (30), les nervures d'un groupe coupant les nervures de l'autre groupe.

9. Machine suivant les revendications 5 et 6, caractérisée en ce que les dépressions (63) ont chaque fois en contour la forme d'un parallélogramme.

10. Machine suivant la revendication 9, caractérisée en ce que la diagonale la plus courte et la diagonale la plus longue de chaque parallélogramme sont respectivement parallèles à la direction longitudinale de la courroie et transversale à cette direction longitudinale de la courroie.

11. Machine suivant l'une quelconque des revendications 3 à 10, caractérisée en ce que les flancs des nervures (61, 62), qui convergent chaque fois vers l'extérieur à partir du point le plus profond des dépressions (63), sont chaque fois étagés en gradins (69) ou sont profilés d'une manière équivalente.

12. Machine suivant l'une quelconque des revendications 1 à 6, caractérisée en ce que les nervures (61, 62) sont conformées et orientées de façon telle que la résistance à la flexion de la courroie (30) autour d'un axe s'étendant transversalement à la direction longitudinale de la courroie soit plus petite qu'autour d'un axe s'étendant parallèlement à la direction longitudinale de la courroie (30).

FIG. 1

FIG. 2

FIG. 3

FIG. 4

FIG. 5

(PRIOR ART)